# EUROPEAN PATENT SPECIFICATION

(11) **EP 1 400 624 B1**
(45) Date of publication and mention of the grant of the patent: **25.04.2007**
(21) Application number: 03255452.9
(22) Date of filing: 02.09.2003
(51) Int. Cl.: D06M 11/64, D06M 13/08, D06M 13/144, D06M 23/10, C08B 15/04

(54) **Concomitant scouring and oxidation process for making oxidized regenerated cellulose**
Simultanes Abkoch- und Oxidationsverfahren zur Herstellung von oxidierter Regeneratzellulose
Procédé de débouillissage et d'oxidation simultanés pour la production de cellulose régénérée oxydée

(30) Priority: 03.09.2002 US 233682
(43) Date of publication of application: 24.03.2004
(73) Proprietor: ETHICON, INC., Somerville, NJ 08876 (US)
(72) Inventor: Saferstein, Lowell, West Orange, New Jersey 07052 (US); Looney, Dwayne L., Flemington New Jersey 08822 (US)
(74) Representative: Mercer, Christopher Paul

(56) References cited:
- US-A- 3 364 200
- US-A- 4 347 057
- US-A- 5 180 398
- US-A- 5 914 003

## Description

### FIELD OF THE INVENTION

The present invention relates to an improved process that combines the oxidation and scouring process in a single step, while eliminating the need for aqueous scouring of rayon knitted fabrics for removing knitting oil.

### BACKGROUND OF THE INVENTION

Oxidized cellulose has been known for many years and has been used for a variety of applications, including as a substitute for tobacco in smoking products. The fact that it is absorbable in the body makes oxidized cellulose an attractive material for medical uses such as sutures, hemostats, and adhesion prevention devices.

Hemostasis and post-operative adhesion prevention present two main concerns in many surgical procedures. The control of bleeding is essential and critical in surgical procedures to minimize blood loss, post-surgical complication and to shorten the duration of the surgery in the operation room. Post-operative tissue and organ adhesions represent a major problem in patients recovering from abdominal surgery. When organs and tissues in the peritoneal cavity are subject to surgical incision or abrasion, there is a tendency for adhesions to form between the affected areas and neighboring tissue. Prevention and reduction of surgical adhesion can be achieved by installing a physical barrier. Oxidized cellulose, due to its bioresorbable, bactericidal and hemostatic properties, has long been used as a topical hemostatic wound dressing, as well as an adhesion prevention barrier in a variety of surgical procedures, including neurosurgery, abdominal surgery, cardiovascular surgery, thoracic surgery, head and neck surgery, pelvic surgery, and skin and subcutaneous tissue procedures. Examples of hemostatic oxidized regenerated cellulose absorbable hemostats that are commercially available include Surgicel® absorbable hemostat, a knitted fabric of oxidized regenerated cellulose (ORC), Surgicel Nu-Knit® absorbable hemostat, a dense ORC fabric, Surgicel® Fibrillar absorbable hemostat, a non woven web of ORC fibers. Examples of an oxidized regenerated cellulose adhesion prevention barrier include Interceed® (TC7) absorbable adhesion barrier. All of the noted hemostats and adhesion barrier are available from Johnson & Johnson Wound Management Worldwide, a division of Ethicon, Inc., Somerville, New Jersey, a Johnson & Johnson Company.

Surgicel®, Surgicel Nu-Knit® and Interceed® are knitted oxidized cellulose fabrics. The process of preparing knitted oxidized regenerated cellulose utilized in surgical dressings and the like (hereinafter ORC) is well known.

Briefly stated, U.S. Pat. No. 3,364,200 disclosed a process for the preparation of oxidized cellulose. U.S. Pat. 4,626, 253 discloses a surgical hemostat comprising oxidized cellulose. U.S. Pat. 5,002,551 and U.S. Pat. 5,007,916 disclose method and material for prevention of surgical adhesions. U.S. 5,180,398 discloses a method of cellulose oxidation by a perfluorinated hydrocarbon solution of nitrogen dioxide.

The fabrics are generally knitted on warp or circular knitting machines from cellulose fibers, most suitably rayon. In these knitting processes, the fibers and certain parts of the knitting machine, i.e. knitting needles, are lubricated with oil called "knitting oil." These oils, although present in quite small amounts, are not biocompatible and therefore not certified for use in body cavities. The residuals can cause complications when the oxidized cellulose is absorbed by the body fluid. Thus, removal of the oil is required to make the fabric biocompatible.

Scouring of ORC precursor roll goods to remove knitting and spin finishing oils in a warm aqueous detergent solution has been carried out for the past 40 years. However, aqueous scouring of rayon knitted fabrics in hot water to remove knitting oils prior to oxidation leads to extensive shrinkage of the rayon fabric. Extensive shrinkage of the knitted rayon fabric for making knitted oxidized cellulose fabric has been encountered when knitted cellulose fabric is washed in hot water with a detergent to remove knitting oils. The knitted roll of cellulose fabric is stretched to recover some of the shrinkage. However, this has lead to runs and tears in the fabric, resulting in about 4% to about 30% waste. Elimination of the aqueous scouring wash for all rayon fabrics prior to oxidation would eliminate the shrinkage of the fabric and control the basis weight better.

The surprising and unexpected finding of the present invention is that the lubricating oil can be removed during the oxidation step, thus totally eliminating the need for a separate scouring step, whether aqueous or non-aqueous. We have found that it is possible to remove the knitting oils from the fabric during its oxidation with a nitrogen oxide in a fluorinated hydrocarbon solvent and the subsequent washings of the oxidized fabric with the same solvent, cold water, 50:50 aqueous alkanol (alcohol:water), and the same anhydrous alkanol, thus eliminating the aqueous scouring step prior to oxidation altogether. Minimal shrinkage is encountered during the oxidation and levels of residual knitting oils are reduced to what had been obtained from conventional aqueous scouring prior to oxidation.

### SUMMARY OF THE INVENTION

There is provided an efficient process for the formation of oxidized regenerated cellulose knitted fabric which avoids the initial aqueous detergent washing step of the art for the removal of knitting oils present on its fibers, thus avoiding the losses due to abrasion and tearing of the fabric involved in the prior art process.

The novel process disclosed herein utilizes the oil-carrying knitted fabric comprising cellulosic fibers as the starting material. This knitted fabric carries at least 0.05 % by weight, suitably from about 0.2 to about 1.0 % by weight, of lubricating, i.e. knitting, oil. The fabric is exposed to oxidation with oxidized nitrogen, suitably at least one member selected from the group consisting of NO, NO₂, and N₂O₄, preferably N₂O₄, in the presence of a fluorinated hydrocarbon solvent, suitably at least one member selected from the group consisting of perfluorocarbons. Those having boiling points in the range from about 30°C to about 100 °C are preferred; with the range from 45 °C to 85 °C more preferred, especially those such as CF₃(CF₂)4CF₃, CF₃(CF₂)5CF₃, C₆F₁₂ or a mixture of these. This oxidation is suitably carried out in a closed reactor system.

The oxidation reaction is preferably carried out at a temperature of between 20°C and 40°C, preferably °C between 25 °C and 35 °C After from about 13 to about 17 hours exposure, the reaction medium, i.e. the solvent containing oxidant and reaction products, is removed from the reactor and recovered. Suitably, the reactor is then again filled with the fluorinated solvent, which is then removed and recovered

The oxidized fabric is quenched by flooding the reactor with water. Suitably the quench water is removed from the fabric and is then allowed to drain. Thereafter the drained fabric is washed at least once, suitably four times, with aqueous alkanol, suitably a C₁-C₆ alkanol, preferably a C₂-C₃ alkanol, more preferably isopropanol. This washing is then followed by washing with absolute alkanol of the same chemical composition as used in the previous step; that is to say preferably isopropanol. It is then dried in a stream of inert gas. The gas used is usually nitrogen at a temperature of between 25 °C and 45 °C, preferably between 30°C and 35 °C.

### DETAILED DESCRIPTION OF THE INVENTION

The present invention is directed to a process of concomitant scouring and oxidizing cellulose in a solution of oxidized nitrogen and perfluorinated hydrocarbon. The present invention allows removal of the knitting oils from the fabric during its oxidation with oxidized nitrogen in a fluorinated hydrocarbon solvent and the subsequent washings of the oxidized fabric with the same solvent, cold water, 50:50 isopropyl alcohol:water and finally with 100% isopropyl alcohol, thus eliminating the scouring step altogether, whether aqueous or non-aqueous.

In the process, the cellulose is attached to and wound loosely around an elongated, perforated core and introduced into a reaction vessel. Fluorinated, suitably perfluorinated hydrocarbon solvent is introduced into the vessel and circulated through the cellulose, after which the rector is closed and oxidized nitrogen is added in the appropriate amount. The cellulose remains in the solution for a period of several hours, up to 24 hours, during which the cellulose becomes oxidized. The duration is determined by the desired degree of oxidation. The oxidized fabric is subsequently washed with the same solvent, cold water, 50:50 isopropyl alcohol:water, then with 100% isopropyl alcohol, and finally dried with warm nitrogen.

In preferred embodiments of the present invention, the perfluorinated hydrocarbon solvent has a boiling point preferably in the range of between about 30°C and about 100°C, more preferably in the range of between about 45°C and about 85°C, such as CF₃(CF₂)4CF₃, CF₃(CF₂)5CF₃, C₆F₁₂, or a mixture of these. Nitrogen oxide concentration in the solution is in the range between about 2% and about 12% by weight, preferably 5-10% by weight. The reactants are maintained at a temperature between about 25°C to about 40°C, preferably between about 25°C to about 35°C. The total reaction time duration ranges from about 10 hours to about 19 hours. In general, N₂O₄ gas was added for about 3 to 5 hours, preferably 4 hours. The temperature ramp was from 25°C to 40°C over about 2 to 5 hours, preferably 5 hours, and the hold time at 40°C was 5 to 9 hours, preferably 8 hours.

**TABLE . I Concomitant Scouring/Oxidation Conditions for Surgicel Nu-Knit@, Surgicel®, and Interceed®**

| **Activity** | **Time (hours)** |
|---|---|
| N₂O₄ Addition | 3-5 (4 Preferred) |
| Ramp 25°C to 35°C | 2-5 (5 Preferred) |
| Oxidation Hold at 35°C | 5-9 (8 Preferred) |
| 1 PF-5060 wash | 15 minutes |
| 4-50:50 (H₂O/IPA) | 15 minutes each |
| 2-100% IPA washes | 15 minutes each |
| Dry with warm N₂ | ∼60 minutes |

The oxidation degree and residual oil contents of the oxidized cellulose along with the oil residue in the recovered Fluorinert (PF-5060, perfluorohexane) and 100% IPA washes are listed below. The combined recovered Fluorinert and combined 100% IPA washes were also analyzed for oil content.

**TABLE II Concomitant Scouring/Oxidation Results for Surgicel Nu-Knit®, Surgicel®, and Interceed®:**

| | Surgicel Nu-Knit@ | Surgicel® | Interceed®: |
|---|---|---|---|
| % Carboxyl inside roll | 19.9% | 18.5% | 12.7% |
| % Carboxyl middle roll | 20.8% | 17.8% | 13.3% |
| % Carboxyl outside roll | 19.6% | 18.0% | 13.1% |
| Residual oil inside roll | 0.01% | 0.01% | 0.01% |
| Residual oil middle roll | 0.03% | 0.01% | 0.01% |
| Residual oil outside roll | 0.02% | 0.01% | 0.02% |
| Wt.% oil in recovered PF-5060 | 0.018% | 0.026% | 0.026% |
| Wt.% oil in silica gel treated PF-5060 | 0.000% | 0.001% | 0.000% |
| Wt.% oil in combined IPA wash | 0.0127% | 0.000% | 0.012% |

Weight percent residual oil in the oxidized fabric was measured using the standard Soxhlet alcohol extraction method. Residual oil in the combined 100% IPA washes and residual oil in the recovered Fluorinert solvent were measured by gas chromatography.

As indicated from the results, the concomitant scouring/oxidation process yields substantially consistent desired degree of oxidation from about 12% to about 21% throughout inside to outside roll of the fabric. The process also achieves substantially consistent results in removing the knitted oil. Residual oils were detected in the amount ranging from about 0.01% to about 0.02% throughout inside to outside roll of the fabric. Also indicated from the result in Table II, the perfluorinated hydrocarbon solvent was recycled for further uses.

The present invention is further described in the following examples. While the following examples demonstrate certain embodiments of the invention, they are not to be interpreted as limiting the scope of the invention, but rather as contributing to a complete description of the invention.

### Example 1:

### Concomitant Scouring and Oxidation of Regenerated Cellulose SURGICEL®

900 grams of non-scoured regenerated cellulose material were wound onto an oxidation beam. The assembly was then placed into a reaction vessel. 7,800 ml of PF-5060 (perfluorohexane, manufactured by Specialty Fluids, 3M Chemical Corporation, St. Paul, MN 55144) solvent was then added and re-circulated through the fabric, while maintaining a temperature of 25°C. The reactor was then sealed and 1,174 grams of N₂O₄ added over a four-hour period. The temperature was then ramped to 35°C over a five hour time period. A temperature of 35°C was thereafter maintained for 8 hours.

The N₂O₄ and solvent were then transferred to an agitated recovery tank for removal of oxidant, by-products and some oil from the PF-5060 solvent. This tank contained 5% aqueous sodium hydroxide to neutralize the oxidant. Another 7,800 ml of PF-5060 solvent were then added to the reactor vessel and re-circulated through the fabric for 15 min. The PF-5060 solvent containing any remaining oxidants, oxidant by-products and oil was then transferred to the recovery tank. The now oxidized regenerated fabric was quenched with a single pass of 48 liters of cold water, which went directly into the recovery tank. The agitation in the recovery tank was then stopped to allow the PF-5060 solvent to separate from the caustic solution. 10 minutes after agitation had ceased, the PF-5060 solvent was removed from the recovery tank for further recycling. 7,800ml of 50:50 (IPA:water) were then added and re-circulated for 15 minutes, then transferred to the recovery tank. This step was repeated a minimum of 4 times or until the pH was greater than 3.1. 7,800ml of 100% IPA were then added to the reactor vessel and re-circulated through the fabric for 15 minutes, then transferred to the recovery tank. This step was repeated a total of two times. A continuous flow of 35°C nitrogen gas was then introduced to the reactor vessel for approximately 1 hour to remove any residual IPA. The fabric was then removed and samples were taken throughout the roll for analysis of carboxyl and oil content. The residual oil content was substantially equivalent to that obtained from hot aqueous and detergent scouring of the fabric.

In accordance with the above procedure, but where in place of perfluorohexane there is utilized CF₃(CF₂)4CF₃, CF₃(CF₂)5CF₃, or mixtures thereof, a similar result is obtained.

Similarly In accordance with the above procedure, but where in place of N₂O₄ there is utilized NO, NO₂, or mixtures thereof, a similar result is obtained

### Example 2:

### Concomitant Scouring and Oxidation of Regenerated Cellulose SURGICEL NU-KNIT®

900 grams of non-scoured regenerated cellulose material were wound onto an oxidation beam. The assembly was then place into a reaction vessel. 7,800 ml of PF-5060 (perfluorohexane, manufactured by Specialty Fluids, 3M Chemical Corporation, St. Paul, MN 55144) solvent were then added and re-circulated through the fabric, while maintaining a temperature of 25°C. The reactor was then sealed and 1,174 grams of N₂O₄ added over a four-hour period. The temperature was then ramped to 35°C over a five hour time period. A temperature of 35°C was thereafter maintained for 8 hours.

The N₂O₄ and solvent were then transferred to an agitated recovery tank for removal of oxidant, by-products and some oil from the PF-5060 solvent. This tank contained 5% aqueous sodium hydroxide to neutralize the oxidant. Another 7,800 ml of PF-5060 solvent were then added to the reactor vessel and re-circulated through the fabric for 15 minutes. The PF-5060 solvent containing any remaining oxidants, oxidant by-products and oil was then transferred to the recovery tank. The now oxidized regenerated fabric was quenched with a single pass of 48 liters of cold water, which went directly into the recovery tank. The agitation in the recovery tank was then stopped to allow the PF-5060 solvent to separate from the caustic solution. 10 minutes after agitation had ceased, the PF-5060 solvent was removed from the recovery tank for further recycling. 7,800 ml of 50:50 (IPA:water) were then added and re-circulated for 15 minutes, then transferred to the recovery tank. This step was repeated a minimum of 4 times or until the pH was greater than 3.1. 7,800ml of 100% IPA were then added to the reactor vessel and re-circulated through the fabric for 15 minutes, then transferred to the recovery tank. This step was repeated a total of two times. A continuous flow of 35°C nitrogen gas was then introduced to the reactor vessel for approximately 1 hour to remove any residual IPA. The fabric was then removed and samples were taken throughout the roll for analysis of carboxyl and oil content. The oil content of the oxidized fabric was substantially equivalent to that obtained from hot aqueous and detergent scouring.

In accordance with the above procedure, but where in place of perfluorohexane there is utilized CF₃(CF₂)4CF₃, CF₃(CF₂)5CF₃, or mixtures thereof, a similar result is obtained.

Similarly In accordance with the above procedure but where in place of N₂O₄ there is utilized NO, NO₂, or mixtures thereof, a similar result is obtained

### Example 3:

### Concomitant Scouring and Oxidation of Regenerated Cellulose (INTERCEED® TC-7)

900 grams of non-scoured regenerated cellulose material were wound onto an oxidation beam. The assembly was then place into a reaction vessel. 7,800 ml of PF-5060 (perfluorohexane, manufactured by Specialty Fluids, 3M Chemical Corporation, St. Paul, MN 55144) solvent were then added and re-circulated through the fabric, while maintaining a temperature of 25°C. The reactor was then sealed and 1,174 grams of N₂O₄ added over a four-hour period. The temperature was then ramped to 35°C over a five hour time period. A temperature of 35°C was thereafter maintained for 8 hours.

The N₂O₄ and solvent were then transferred to an agitated recovery tank for removal of oxidant, by-products and some oil from PF-5060 solvent. This tank contained 5% aqueous sodium hydroxide to neutralize the oxidant. 7,800 ml of PF-5060 solvent were then added to the reactor vessel and re-circulated through the fabric for 15 minutes. The PF-5060 solvent containing any remaining oxidants, oxidant by-products and oil was then transferred to the recovery tank. The now oxidized regenerated fabric was quenched with a single pass of 48 liters of cold water, which went directly into the recovery tank. The agitation in the recovery tank was then stopped to allow the PF-5060 solvent to separate from the caustic solution. 10 minutes after agitation had ceased, the PF-5060 solvent was removed from the recovery tank for further recycling. 7,800 ml of 50:50 (IPA:water) were then added and re-circulated for 15 minutes, then transferred to the recovery tank. This step was repeated a minimum of 4 times or until the pH was greater than 3.1. 7,800ml of 100% IPA were then added to the reactor vessel and re-circulated through the fabric for 15 minutes, then transferred to the recovery tank. This step was repeated a total of two times. A continuous flow of 35°C nitrogen gas was then introduced to the reactor vessel for approximately 1 hour to remove any residual IPA. The fabric was then removed and samples were taken throughout the roll for analysis of carboxyl and oil content. The oil content of the oxidized fabric was substantially equivalent to that obtained from hot aqueous and detergent scouring.

In accordance with the above procedure, but where in place of perfluorohexane there is utilized CF₃(CF₂)4CF₃, CF₃(CF₂)5CF₃, or mixtures thereof, a similar result is obtained.

Similarly In accordance with the above procedure, but where in place of N₂O₄ there is utilized NO, NO₂, or mixtures thereof, a similar result is obtained

## Claims

1. Process for the formation of oxidized regenerated cellulose knitted fabric comprising the steps of:
a) oxidizing knitted fabric comprising cellulosic fibers carrying at least 0.05% by weight of lubrication oil, by exposing said fabric to oxidation with oxidized nitrogen in the presence of fluorinated hydrocarbon solvent at a temperature of between 20°C and 40°C,
b) removing the solvent containing residual oxidant and knitting oil from the fabric,
c) quenching said oxidation reaction by rinsing said oxidized fabric with water,
d) separating said quench water from said fabric, and washing said fabric at least once with aqueous alkanol after the water rising step,
e) washing said fabric with alkanol; and
f) drying said alkanol-washed fabric in a stream of inert gas.

2. The process of claim 1 wherein the alkanol of step e) is an absolute alkanol.

3. The process of claim 1 or claim 2 comprising the additional step (b)(i) after removal of solvent containing residual oxidant and knitting oil, comprising washing the fabric with additional fluorocarbon solvent prior to quenching step (c).

4. The process of any one of claims 1 to 3 wherein the oxidized nitrogen is NO, NO₂ or N₂O₄.

5. The process of any one of claims 1 to 4 wherein the fluorinated hydrocarbon is selected from the group consisting of perfluorocarbons having boiling points in the range from 30°C to 100°C.

6. The process of claim 5 wherein the perfluorocarbon is CF₃(CF₂)4CF₃, CF₃(CF₂)5CF₃ or C₆F₁₂.

7. The process of any one of claims 1 to 6 wherein the oxidation is carried out at a temperature of between 25°C and 35°C.

8. The process of any one of claims 1 to 7 wherein the alkanol comprises 2 or 3 carbon atoms.

9. The process of claim 8 wherein the alkanol is isopropanol.

10. The process of any one of claims 1 to 9 wherein the inert gas is nitrogen.

11. The process of claim 10 wherein the drying is carried out at a temperature of between 25°C and 45°C.

## Patentansprüche

1. Verfahren zur Herstellung von Maschenware aus oxidierter Regeneratcellulose umfassend die Schritte:
a) Oxidieren von Maschenware, die Cellulosefasern umfaßt, die mindestens 0,05 Gew.-% Schmieröl tragen, durch Einwirken von Oxidation mit oxidiertem Stickstoff in Anwesenheit von fluoriertem Kohlenwasserstoff-Lösungsmittel bei einer Temperatur von zwischen 20°C und 40°C auf die Ware,
b) Entfernen des Lösungsmittels, das restliches Oxidationsmittel und Stricköl aus der Ware enthält,
c) Abbrechen der Oxidationsreaktion durch Spülen der oxidierten Ware mit Wasser,
d) Trennen des Wassers von der Ware und mindestens einmal Waschen der Ware mit wasserhaltigem Alkanol nach dem Spülschritt mit Wasser,
e) Waschen der Ware mit Alkanol; und
f) Trocknen der mit Alkanol gewaschenen Ware in einem Strom aus inertem Gas.

2. Verfahren nach Anspruch 1, wobei der Alkanol aus Schritt e) ein absoluter Alkanol ist.

3. Verfahren nach Anspruch 1 oder Anspruch 2, das nach Entfernen des Lösungsmittels, das restliches Oxidationsmittel und Schmieröl enthält, und vor Schritt (c) den zusätzlichen Schritt (b)(i) umfaßt, umfassend Waschen der Ware mit zusätzlichem Fluorkohlenstoff-Lösungsmittel.

4. Verfahren nach einem der Ansprüche 1 bis 3, wobei der oxidierte Stickstoff NO, NO₂ oder N₂O₄ ist.

5. Verfahren nach einem der Ansprüche 1 bis 4, wobei der fluorierte Kohlenwasserstoff ausgewählt ist aus der Gruppe bestehend aus Perfluorkohlenstoffen, die Siedepunkte im Bereich von 30°C bis 100°C aufweisen.

6. Verfahren nach Anspruch 5, wobei der Perfluorkohlenstoff CF₃(CF₂)4CF₃, CF₃(CF₂)5CF₃ oder C₆F₁₂ ist.

7. Verfahren nach einem der Ansprüche 1 bis 6, wobei die Oxidation bei einer Temperatur von zwischen 25°C und 35°C ausgeführt wird.

8. Verfahren nach einem der Ansprüche 1 bis 7, wobei der Alkanol 2 oder 3 Kohlenstoffatome umfasst.

9. Verfahren nach Anspruch 8, wobei der Alkanol Isopropanol ist.

10. Verfahren nach einem der Ansprüche 1 bis 9, wobei das inerte Gas Stickstoff ist.

11. Verfahren nach Anspruch 10, wobei das Trocknen bei einer Temperatur von zwischen 25°C und 45°C ausgeführt wird.

## Revendications

1. Procédé de formation d'un tissu tricoté en cellulose régénérée et oxydée comprenant les étapes consistant à :
a) oxyder un tissu tricoté comprenant des fibres cellulosiques portant au moins 0,05 % en poids d'huile lubrifiante, en exposant ledit tissu à une oxydation au moyen d'azote oxydé en présence d'un solvant de type hydrocarbure fluoré à une température comprise entre 20 et 40°C,
b) éliminer du tissu le solvant contenant l'oxydant et huile de tricotage résiduels,
c) stopper ladite réaction d'oxydation par rinçage dudit tissu oxydé avec de l'eau,
d) séparer ladite eau ayant servi à stopper la réaction dudit tissu et laver ledit tissu au moins une fois avec de l'alcanol aqueux après l'étape de rinçage à l'eau,
e) laver ledit tissu avec de l'alcanol ; et
f) sécher ledit tissu lavé à l'alcanol dans un courant de gaz inerte.

2. Procédé selon la revendication 1, dans lequel l'alcanol de l'étape e) est un alcanol absolu.

3. Procédé selon la revendication 1 ou 2 comprenant l'étape supplémentaire (b) (i) intervenant après l'élimination du solvant contenant l'oxydant et l'huile de tricotage résiduels, comprenant le lavage du tissu au moyen d'un solvant supplémentaire de type hydrocarbure préalablement à l'étape c) consistant à stopper la réaction.

4. Procédé selon l'une quelconque des revendications 1 à 3, dans lequel l'azote oxydé est le NO, le NO₂ ou le N₂O₄.

5. Procédé selon l'une quelconque des revendications 1 à 4, dans lequel l'hydrocarbure fluoré est choisi dans le groupe constitué des perfluoro-carbures possédant des points d'ébullition se situant dans un intervalle de 30 à 100°C.

6. Procédé selon la revendication 5, dans lequel le perfluorocarbure est le CF₃(CF₂)4CF₃, le CF₃(CF₂)5CF₃ ou le C₆F₁₂.

7. Procédé selon l'une quelconque des revendications 1 à 6, dans lequel l'oxydation est mise en oeuvre à une température comprise entre 25 et 35°C.

8. Procédé selon l'une quelconque des revendications 1 à 7, dans lequel l'alcanol comprend 2 ou 3 atomes de carbone.

9. Procédé selon la revendication 8, dans lequel l'alcanol est l'isopropanol.

10. Procédé selon l'une quelconque des revendications 1 à 9, dans lequel le gaz inerte est l'azote.

11. Procédé selon la revendication 10, dans lequel le séchage est conduit à une température comprise entre 25 et 45°C.
